# EUROPEAN PATENT SPECIFICATION

(11) **EP 3 841 875 B1**
(45) Date of publication and mention of the grant of the patent: **10.07.2024**
(21) Application number: 20212142.2
(22) Date of filing: 07.12.2020
(51) Int. Cl.: A01K 1/015

(54) **BEDDING FOR SMALL ANIMALS**
BETTSTREU FÜR KLEINE TIERE
LITIÈRE POUR PETITS ANIMAUX

(30) Priority: 23.12.2019 CZ 20193706
(43) Date of publication of application: 30.06.2021
(73) Proprietor: Tommi CZ s.r.o., 39701 Pisek (CZ)
(72) Inventor: Titarenko, Grigory, Moskva (RU)
(74) Representative: Sedlák, Jirí

(56) References cited:
- EP-A1- 2 039 240
- EP-A1- 2 868 192
- WO-A1-97/15184
- US-A1- 2015 360 200

## Description

### Field of the Invention

The invention relates to the field of breeding, in particular to bedding for small animals.

### Background of the invention

Bedding is generally a material used as litter for small animals. This can be a variety of organic materials of natural or synthetic nature. The function of bedding litter is, in particular, that the animals lie on soft surface, allowing regulation of the flor temperature and collection of feces. The known bedding litters for small animals are most often in the form of granules, differing in shape and material composition. The shape of granules is determined by the method of production and the material composition is determined by the input materials from which the bedding is made. These are mostly porous materials, insoluble in water, cellulose-based materials in the form of wood or paper. Above that some other additives are added to the bedding, such as lime, gypsum or various minerals. The disadvantages of commonly known beddings are, among other, a high proportion of dust allergens affecting both, small animals and humans.

EP 2 039 240 A1 discloses a litter system for a pet animal.

From CZ 7555 the solution describing bedding litter for small animals is known, consisting of cellulose, absorber, gypsum and polyolefin. The disadvantage of this solution is its low absorption capacity of liquids and odors.

Furthermore, ecological bedding litter for cats and small rodents is known from CZ 22415, which is prepared by using industrial waste, generated during production of hygiene products, such as sanitary napkins, nappy diaper covers for babies, etc. Ecological bedding litter consists of granules of cellulose, latex, polyethylene terephthalate or polyethylene fibers, sorption agent made of polyacrylic acid, sodium salt and water, amino acids and an aluminum-calcium sorbent. The disadvantage of this solution is mainly the low absorption of liquids and odors, which requires frequent replacement and higher consumption of bedding litter.

Another bedding litter prepared from industrial waste generated during the production of hygienic means, is known from CZ 282332, describing in particular the method of production of this bedding litter.

The disadvantages of the bedding litter produced by the method according to the said document are an inappropriate compaction of the resulting granules, which causes a considerable reduction in their sorption capacities.

The objective of the invention is therefore to provide a bedding litter for small animals with ideal properties, that would eliminate the above-mentioned disadvantages, i.e. with maximum moisture and odor absorption, minimum dust, good tolerability for animals and household members and, last but not least, with good economical availability.

### Summary of the invention

The set task is solved using bedding for small animals according to this invention.

The bedding litter consists of granules containing cellulose-based material. The essence of the invention is, that the bedding contains 90% by weight of pulp 10% of cuttings, coming from the manufacture of hygienic products intended for absorbing body fluids without any addition of sorbent. These cuttings from the production of hygienic products for the absorption of body fluids are made of a mixture of feminine hygiene products, baby diapers, etc.

The bedding created in this way significantly increases the absorption of excrements and odors of small animals, which contributes to greater comfort in households.

The presence of cuttings from the production of hygienic products for the absorption of body fluids ensures greater sorption capacity of the bedding and at the same time helps in the ecological disposal of these cuttings, which would need to be disposed of otherwise, e.g. by incineration. In addition, it is a completely harmless material from both a health and a hygienic aspect.

The granules preferably have cylindrical shape, the diameter of the cylinder being in the range of 5 to 8 mm. The height of the cylinder is equal to its diameter or does not differ by more than 30%. The dimensions of granules are chosen according to the species and size of animals for which the bedding litter is intended.

The surface of the granule is preferably saturated with aloe vera extract, i.e. an extract of a medicinal plant suitable for animal health and welfare, or with a solution of colloidal silver nanoparticles to provide antimicrobial effect of the bedding, or with an odor lock based on amino acid salts and aluminum-calcium sorbent or perfume, i.e. a fragrant component. The saturation of the bedding granules with these components provides besides effective odor absorption another significant benefit that known bedding does not provide.

The advantages of the small animal bedding litter according to the invention are, in particular, that it absorbs odors extremely well, absorbs moisture very well and dehydrates the excrements of small domestic animals within a few seconds. In addition, this bedding litter is very light, as it has a minimum weight, and so it can be handled also by children who care about animals.

Furthermore, the bedding litter according to the invention has a low material consumption, in particular five times lower on average than for mineral bedding, thus saving the domestic budget, being environmentally friendly, and made mainly of pulp, i.e. it is 100% degradable and environmentally considerate. Its disposal is easy and fast, for example as in the case of biological waste, i.e. by disposal in the toilet or composting. In addition, the bedding is not harmful to health, does not create an environment suitable for the growth of bacteria, significantly reduces the possibility of spreading the bedding litter around, does not cause coughs, does not irritate the mucous membranes, so it is also suitable for allergy sufferers and asthmatics. The cost of the bedding litter according to the invention is lower compared to known beddings.

### Examples of the invention Embodiment

### Example 1

The bedding litter for small animals according to the invention is made in the shape of cylindrical granules with a diameter of 5 mm and a height of 8 mm. The bedding litter contains 90% by weight pulp and 10% of cuttings from the production of hygienic products for the absorption of body fluids without the addition of sorbent. The pulp mixed with these cuttings ensures the absorption of liquid excrements and odors. The surface of the granule is saturated with an odor lock based on salts of amino acids and aluminum-calcium sorbent. The bedding litter in this version of realization is suitable for cats.

In other examples the granules can be made with various diameter and a height. The surface of the granules can be saturated with an extract of aloe vera or with a solution of colloidal silver nanoparticles or with lavender perfume.

### Industrial applicability

The bedding litter for small animals according to the present invention can be used for any domestic or laboratory animals.

## Claims

1. Bedding litter for small animals, consisting of granules containing cellulose-based material,
**characterized in that** it contains 90% by weight of pulp and 10% by weight of cuttings from the production of hygienic products intended for the absorption of body fluids without the addition of sorbent.

2. Bedding litter according to claim 1, **characterized in that** the granules have a diameter of 5 mm to 8 mm and a height of 5 to 10 mm.

3. Bedding litter according to any of claims 1 or 2, **characterized in that** the surface of the granule is saturated with extract of aloe vera.

4. Bedding litter according to any of claims 1 or 2, **characterized in that** the surface of the granule is saturated with colloidal silver nanoparticle solution.

5. Bedding litter according to any of claims 1 or 2, **characterized in that** the surface of the granule is saturated with an odour lock based on salts of amino acids and aluminiumcalcium sorbent.

6. Bedding litter according to any of claims 1 or 2, **characterized in that** the surface of the granule is saturated with perfume.

## Patentansprüche

1. Kleintiereinstreu, bestehend aus Pellets, die Material auf Zellulosebasis enthalten, **dadurch gekennzeichnet, dass** sie 90 Gew.-% Zellstoff und 10 Gew.-% Verschnitt aus der Herstellung von Hygieneprodukten zur Absorption von Körperflüssigkeiten ohne Zusatz von Sorptionsmitteln enthält.

2. Kleintiereinstreu nach dem Anspruch 1, **dadurch gekennzeichnet, dass** ein Pellet einen Durchmesser zwischen 5 mm und 8 mm und eine Höhe zwischen 5 und 10 mm aufweist.

3. Kleintiereinstreu nach einem der Ansprüche 1 oder 2, **dadurch gekennzeichnet, dass** die Oberfläche der Pellets mit Aloe-Vera-Extrakt getränkt ist.

4. Kleintiereinstreu nach einem der Ansprüche 1 oder 2, **dadurch gekennzeichnet, dass** die Oberfläche der Pellets mit einer Kolloidales-Silber-Nanopartikel-Lösung getränkt ist.

5. Kleintiereinstreu nach einem der Ansprüche 1 oder 2, **dadurch gekennzeichnet, dass** die Oberfläche der Pellets mit einem Geruchsbindemittel auf Basis der Salze von Aminosäuren und eines Aluminium-Kalzium-Sorptionsmittels getränkt ist.

6. Kleintiereinstreu nach einem der Ansprüche 1 oder 2, **dadurch gekennzeichnet, dass** die Oberfläche der Pellets mit einem Parfüm getränkt ist.

## Revendications

1. Litière pour petits animaux en granulés contenant une matière à base de cellulose, **caractérisée en ce qu'** elle contient 90 % en poids de cellulose et 10 % en poids de restes issus de la production de produits d'hygiène destinés à absorber les fluides corporels sans ajout d'absorbant.

2. Litière selon la revendication 1, **caractérisée en ce que** les granulés ont un diamètre de 5 mm à 8 mm et une hauteur de 5 à 10 mm.

3. Litière selon l'une des revendications 1 ou 2, **caractérisé e en ce que** la surface de granulés est saturée d'extrait d'aloe vera.

4. Litière selon l'une des revendications 1 ou 2, **caractérisé e en ce que** la surface de granulés est saturée d'une solution de nanoparticules d'argent colloïdal.

5. Litière selon l'une des revendications 1 ou 2, **caractérisé e en ce que** la surface de granulés est saturée d'un verrouillage des odeurs à base de sels d'acides aminés et s'absorbant alumino-calcique.

6. Litière selon l'une des revendications 1 ou 2, **caractérisé e en ce que** la surface de granulés est saturée de parfum.
